# EUROPÄISCHE PATENTSCHRIFT

(11) **EP 4 151 564 B1**
(45) Veröffentlichungstag und Bekanntmachung des Hinweises auf die Patenterteilung: **19.08.2026**
(21) Anmeldenummer: 21197521.4
(22) Anmeldetag: 17.09.2021
(51) Int. Cl.: B65G 27/02, B65G 47/14, B65G 59/06

(54) **VIBRATIONSWENDELFÖRDERER UND DICHTRINGVEREINZELUNGSBAUGRUPPE**
VIBRATING HELICAL CONVEYOR AND SEALING RING SEPARATION ASSEMBLY
TRANSPORTEUR HÉLICOÏDAL À VIBRATIONS ET MODULE DE SÉPARATION DE BAGUE D'ÉTANCHÉITÉ

(43) Veröffentlichungstag der Anmeldung: 22.03.2023
(73) Patentinhaber: Ohrmann GmbH, 59519 Möhnesee (DE)
(72) Erfinder: PINCK, Uwe, 59519 Möhnesee (DE)
(74) Vertreter: Prinz & Partner mbB

(56) Entgegenhaltungen:
- CN-A- 106 395 314
- CN-A- 112 474 387
- JP-U- S51 143 978
- US-A- 3 114 448
- US-A1- 2002 008 004

## Beschreibung

Die Erfindung betrifft einen Vibrationswendelförderer, mit einem in Vibration versetzbaren Sortiertopf, der auf seiner Innenseite einen sich schneckenförmig zum oberen Rand des Sortiertopfs wendelnden Absatz hat, entlang dem in den Sortiertopf chaotisch eingebrachte Dichtringe nacheinander stehend nach oben gefördert werden, einem am oberen Rand sich an den Absatz anschließenden schlitzförmigen Fallschacht, in den der oberste Dichtring am Absatz bewegt wird, wobei am unteren Ende des Fallschachts eine Abnahmestelle für ein Aufnahmewerkzeug vorgesehen ist.

Solche Vibrationswendelförderer nach der Erfindung arbeiten nach dem sogenannten Mikrowurf-Prinzip. Die in diesen Vibrationswendelförderern separierten Dichtringe werden am unteren Ende des Fallschachts automatisch entnommen und dann ebenfalls automatisch montiert. Wichtig dabei ist, dass die Position der Dichtringe an der sogenannten Abnahmestelle immer gleich ist, d.h. dass deren Mittelpunkte immer in gleicher vertikaler Position sind.

Nachdem aber der Fallschacht immer spezifisch auf den Dichtring und dessen Außendurchmesser sowie die Schnurstärke abgestimmt ist, macht es ökonomisch Sinn, den Vibrationswendelförderer in Baugruppen zu unterteilen. Der Sortiertopf kann für verschiedengroße Dichtringe, also Dichtringe mit unterschiedlichen Durchmessern und Schnurstärken, verwendet werden. Der Fallschacht jedoch ist als Wechselteil in Form einer Fallschachteinheit ausgeführt. Somit wird, abhängig von den zu vereinzelnden Dichtringen, eine entsprechende Fallschachteinheit an den Sortiertopf angeschraubt. Der Fallschacht ist üblicherweise von unten nach oben komplett gefüllt mit übereinanderstehenden Dichtringen. Der oberste Dichtring schließt sozusagen den Schlitz, der den Fallschachtbeginn und das Ende des Absatzes darstellt. Wichtig dabei ist, dass der oberste Dichtring im Fallschacht nicht zu weit aus dem Schlitz nach oben in den Topf vorsteht, denn dann kann es zu einem Anhäufen von Dichtringen längs des Absatzes kommen, diezu einem Stau führen. Optimal ist es, wenn der oberste Dichtring den Schlitz gerade verschließt, sodass die nachfolgenden, vereinzelten Dichtringe über diesen obersten Dichtring hinwegbewegt werden können, um dann vorbestimmbar in den Topf herabzufallen. Damit bleibt die Reihe an Dichtringen, die längs des Absatzes stetig hochwandern, unbeeinflusst.

Das jedoch bedeutet automatisch, dass nicht nur die Breite des Fallschachts an den Außendurchmesser sowie die Tiefe des Fallschachtes an die Schnurstärke des Dichtrings angepasst werden müssen, sondern auch die Höhe des Fallschachtes. Werden nämlich beispielsweise etwas größere Dichtringe verwendet als bei der vorherigen Nutzung, stapeln diese sich höher auf, zumal die Abnahmestelle immer die unterste Position am Fallschacht ist. Das bedeutet wiederum, es muss eine Anpassung der Position des Schlitzes am Ende des Absatzes stattfinden, denn bei einem etwas größeren Dichtring und sich einer damit ergebenden größeren Stapelhöhe muss der Schlitz am obersten Ende des Fallschachtes etwas höher liegen als bei kleineren Dichtringen. Der Aufwand für solche Vibrationswendelförderer ist damit größer, und die Anpassung aufwendiger. Zudem ist der Größenbereich der vereinzelbaren Dichtringe eingeschränkt, weil die notwendigen Höhenanpassungen von der Abnahmestelle bis zum Schlitz (oberstes Ende des Fallschachts) nur in bestimmten Grenzen möglich sind, angesichts der Tatsache, dass die Steigung der Wendel nicht beliebig im Bereich des oberen Endes und des Fallschachtes verändert werden kann.

Die US 2002/008004 A1 offenbart einen Vibrationswendelförderer nach dem Oberbegriff des Anspruchs 1. Das genannte Dokument zeigt einen Sortiertopf zum Positionieren von Teilen. Der Sortiertopf ordnet dabei Teile in einer Reihe an und besitzt ein offenes Ende an das eine Förderleitung anschließt, wobei am unteren Ende der Förderleitung eine Abnahmestelle für einen Positionierzylinder vorhanden ist. Vor der Abnahmestelle für den Positionierzylinder sind im Fallschacht zwei Kolbenblöcke vorgesehen, die mit Verstellkolben gekoppelt sind, über die die Kolbenblöcke individuell und schrittweise in den Kanal ausgefahren werden können, wobei beide Kolbenblöcke in den Kanal gefahren werden, um einerseits ein Teil am herabfahren zu hindern und andererseits mit dem oberen Kolbenblock gleichzeitig zu klemmen.

Aufgabe der Erfindung ist es deshalb, einen Vibrationswendelförderer zu schaffen, der weniger aufwendig ausgebildet ist, um auf einfachere Weise unterschiedliche Dichtringe vereinzeln zu können.

Dies wird durch einen Vibrationswendelförderer nach Anspruch 1 erreicht. Vor der Abnahmestelle sind zwei wechselweise in den Fallschacht eindringende, vertikal übereinander angeordnete, motorisch angetriebene Barriereteile vorgesehen, deren Bewegung zueinander gegengleich ist, und über denen sich die im Fallschacht befindlichen Dichtringe stapeln können, wobei der unterste Dichtring bei zurückgezogenem unteren Barriereteil auf die Aufnahmestelle fallen kann.

Beim erfindungsgemäßen Vibrationswendelförderer stapeln sich die Dichtringe nicht wie im Stand der Technik beginnend von der Abnahmestelle ohne Zwischenraum nach oben bis zum Schlitz. Vielmehr stapeln sich die Ringe erst oberhalb der Barriereteile, sodass zwischen den Barriereteilen und dem untersten Dichtring in der Abnahmestelle ein Zwischenraum entstehen kann. Durch Anpassung der vertikalen Lage der Barriereteile an den Außendurchmesser des Dichtrings kann der Abstand zwischen dem obersten Barriereteil und dem Schlitz am oberen Ende des Fallschachtes exakt an den Dichtringdurchmesser angepasst werden, sodass unabhängig vom Durchmesser des Dichtrings der oberste Dichtring gerade den Schlitz schließt und ein nachfolgender Dichtring über ihn hinweglaufen und herabfallen kann. Damit ist es möglich, die Höhe der Oberkante der letzten Wendel konstant zu halten, unabhängig von dem Durchmesser der verwendeten Dichtringe. Die wechselseitig in den Fallschacht eindringenden Barriereteile stellen einerseits sicher, dass nur immer ein Dichtring nach unten zur Abnahmestelle fallen kann und darüber hinaus sorgt, wie gesagt, das obere Barriereteil dafür, dass der Stapel an Dichtringen immer korrekt im Bereich des Schlitzes endet.

Besonders einfach sind die Barriereteile dann ausgeführt, wenn sie durch einen gemeinsamen Antrieb bewegt sind.

Dabei können die Barriereteile beispielsweise auf einer gemeinsamen Wippe sitzen, die vom Antrieb geschwenkt wird, oder auf einem gemeinsamen, hin und her bewegten Schieber.

Barriereteile werden, wie zuvor bereits erläutert, motorisch angetrieben. Ein motorischer Antrieb kann ein elektromotorischer Antrieb sein oder auch ein hydraulischer oder pneumatischer Antrieb. Ein pneumatischer Antrieb ist besonders einfach und wartungsarm und hat damit Vorteile. Der Antrieb muss auch nicht zwingend ein eigener Antrieb nur für die Barriereteile sein. Vielmehr können die Barriereteile an andere bewegte Teile des Vibrationswendelförderers oder an sich bewegende angrenzender Baugruppen angekoppelt sein, z.B. über ein Getriebe, worunter auch Gestänge und dgl. fallen.

Die Barriereteile müssen den Fallschacht nicht komplett in seiner gesamten Breite verschließen, vielmehr können sie in vollständig in den Fallschacht eingeschobener Stellung diesen nur teilweise in ihrer Bewegungsrichtung durchdringen. Bereits dies ist ausreichend, um die Dichtringe zu blockieren. Damit sind die Bewegungsstrecken für die Barriereteile geringer als bei längeren Barriereteilen und ihre träge Masse wird zudem reduziert.

Eine weitere Variante der Erfindung sieht vor, dass der Abstand der Barriereteile 80 - 120 % der Breite des Fallschachts entspricht. Nachdem die Breite des Fallschachtes größer ist als der Außendurchmesser der hier vereinzelten Dichtringe, ist sichergestellt, dass die Barriereteile zwischen sich einen so minimalen Abstand haben, dass sie den Dichtring nicht deformieren, welcher zwischen den Barriereteilen liegt. Ein größerer Abstand wiederum ist nachteilig, weil ansonsten nicht nur ein singulärer Dichtring zwischen die beiden Barriereteile fallen würde, sondern ein zweiter teilweise in diesen Zwischenring eindringen würde. Beim Eindringen des oberen Barriereteils würde dieses diesen zweiten Dichtring deutlich nach oben schieben, so dass der oberste Dichtring ständig immer auf und ab pulsieren würde.

Die Barriereteile können ein zulaufendes, freies Ende haben, mit dem sie in den Fallschacht ragen, sodass sie die Dichtringe beim seitlichen Zustellen in den Fallschacht nicht deformieren oder beschädigen und die Dichtringe gegebenenfalls auch etwas zurück nach oben drängen können.

Die Barriereteile sind vorzugsweise in einer Wand am Fallschacht linear geführt.

Theoretisch können mit einem Fallschacht mehrere, sich leicht unterscheidende Dichtringe vereinzelt werden. Die entsprechende Anpassung erfolgt über die Positionierung der Wechselteile. Eine Variante der Erfindung sieht jedoch vor, dass der Fallschacht in einer als Wechselteil ausgebildeten Fallschachteinheit vorgesehen ist, welche an dem Sortiertopf zerstörungsfrei lösbar befestigt ist. Über unterschiedlich breite und gegebenenfalls auch unterschiedlich tiefe (in horizontaler Richtung) Fallschächte können diese optimal auf die zu vereinzelnden Dichtringe angepasst werden. Der Sortiertopf hat im Bereich des oberen Randes eine seitliche Ausnehmung, und zwar im Bereich des Fallschachtbeginns. Das Wechselteil schließt diese Ausnehmung und umfasst nicht nur den Fallschacht, sondern auch den Fallschachtbeginn, also den zuvor genannten, an den Absatzbereich angrenzenden Schlitz. Die Schlitzgröße ist dementsprechend auf die Außendimension des Dichtrings angepasst.

Die Erfindung betrifft darüber hinaus eine Dichtringvereinzelungsbaugruppe mit einem erfindungsgemäßen Vibrationswendelförderer und mehreren, als Wechselteile ausgeführten Fallschachteinheiten, die jeweils einen anderen Fallschacht haben und an dem Sortiertopf zerstörungsfrei lösbar befestigbar sind. Der Sortiertopf hat im Bereich des oberen Randes eine seitliche Ausnehmung im Bereich des Fallschachtbeginns, wobei jedes Wechselteil die Ausnehmung schließen kann und den Fallschacht samt Fallschachtbeginn umfasst. Die Wechselteile haben aber unterschiedliche Fallschachtbreiten und /oder Fallschachttiefen. Die Erfindung schafft somit eine Art modulares Baukastensystem, mit welchem durch ein anderes Wechselteil auch andere Dichtringe vereinzelt werden können.

Vorzugsweise hat jedes Wechselteil ein oder mehrere an ihm angebrachte Barriereteile, was die Montage beschleunigt.

Theoretisch könnte jedoch für eine Dichtringvereinzelungsbaugruppe auch ein am Sortiertopf vorgesehenes Barriereteil oder vorgesehene Barriereteile verwendet werden, die dann allerdings höheneinstellbar sein müssen, um ihre Lage an den Außendurchmesser des jeweiligen Dichtrings anpassen zu können.

Vergleicht man die Wechselteile, d.h. die Fallschachteinheiten mit unterschiedlichen Fallschachtbreiten und/oder Fallschachttiefen, so sitzen die Barriereteile an unterschiedlichen Höhenpositionen, wobei diese Höhenpositionen so auf die jeweiligen Dichtringe abgestimmt sind, dass das oberste Ende des obersten Dichtrings im Fallschacht immer die gleiche vertikale Position hat. Das bedeutet, der nötige Höhenausgleich des Fallschachts wird über die Position der Barriereteile, insbesondere der Position des oberen Barriereteils, erreicht.

Die Abnahmestellten der Wechselteile müssen, bezogen auf den Mittelpunkt der jeweils zu vereinzelnden Dichtringe, in ihrem montierten Zustand dieselbe vertikale Position haben.

Die Antriebe sind vorzugsweise so ausgebildet, dass sie an alle Barriereteile ankoppelbar sind, egal welches Wechselteil am Sortiertopf angebracht ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines erfindungsgemäßen Vibrationswendelförderers als Teil einer erfindungsgemäßen Dichtringvereinzelungsbaugruppe,
- Figur 2 eine perspektivische Ansicht nur eines beim erfindungsgemäßen Vibrationswendelförderer und der erfindungsgemäßen Dichtringvereinzelungsbaugruppe einsetzbaren Wechselteils, und
- Figur 3 eine vergrößerte Ansicht des Wechselteils nach Figur 2 mit abgenommener Deckplatte und sich im Fallschacht befindlichen Dichtringen,
- Figur 4 eine Detailansicht des Vibrationswendelförderers von innen im Bereich des oberen Randes des Dichtrings und des Fallschachtbeginns.

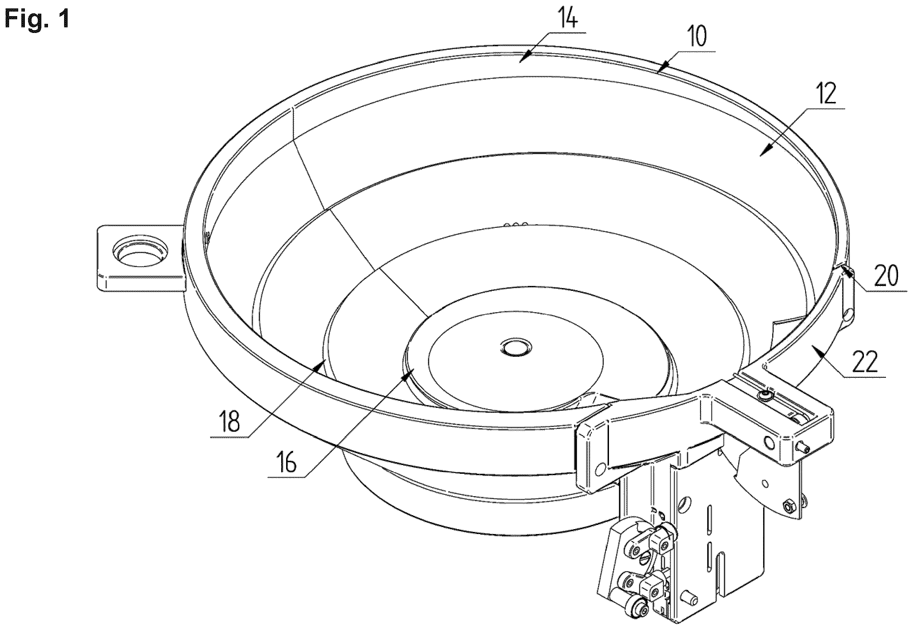

In Figur 1 ist ein Vibrationswendelförderer 10 dargestellt, der nach dem Mikrowurf-Prinzip arbeitet, d. h. ein Vibrationsvereinzelner ist.

Dieser Vibrationswendelförderer 10 umfasst einen Sortiertopf 12, der sich nach oben zu seinem oberen Rand 14 trichterförmig aufweitet. Im Inneren des Topfes beginnt vom Boden 16 ausgehend ein Absatz 18, der sich schneckenförmig bis zum oberen Rand 14 mit gleichmäßiger Steigung emporwendelt.

Die den Sortiertopf 12 bildende Seitenwand hat im Bereich des oberen Randes 14 über einen gewissen Umfangswinkelabschnitt eine seitliche Ausnehmung 20, welche durch ein sogenanntes Wechselteil 22 geschlossen wird. Das Wechselteil 22, welches die Innenseite des Sortiertopfes 12 komplettiert, umfasst den obersten Abschnitt des Absatzes 18 und schließt sich an das obere Ende des Absatzes 18, d.h. der Oberkante der letzten Wendel am Sortiertopf 12 absatzlos an. Der Abschnitt des Absatzes 18, welcher am Wechselteil 22 ausgebildet ist, hat dieselbe Steigung wie der Abschnitt des Absatzes 18 am Sortiertopf 12. Die Höhe der Oberkante der letzten Wendel bleibt damit konstant, unabhängig von dem Durchmesser der verwendeten Dichtringe 27.

Der Absatz 18 endet im Wechselteil 22 (auch Fallschachteinheit genannt) mit einem Schlitz 23 im Absatz, der in Umfangsrichtung etwas länger ist als damit zu vereinzelnde Dichtringe 27 und auch etwas in radialer Richtung breiter ist als die Schnurdicke der zu vereinzelnden Dichtringe 27.

Dieser Schlitz 23 ist somit auf die zu vereinzelnden Dichtringe 27 und ihre Geometrie abgestimmt.

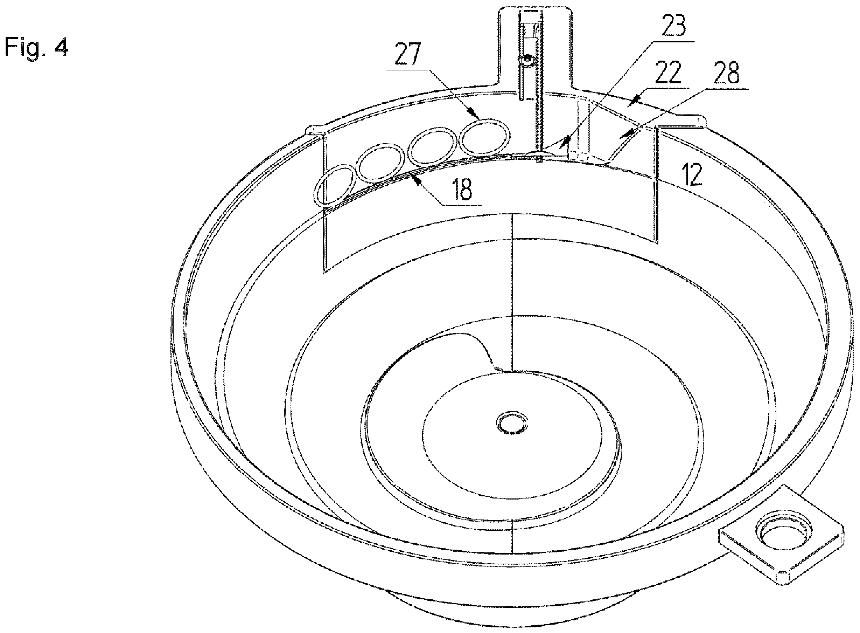

Nach dem Schlitz 23 beginnt eine schräg nach innen verlaufende, keilförmige Wand 28 (siehe Figur 4), die die Dichtringe 27, welche über den Schlitz 23 hinweglaufen (Näheres wird nachfolgend noch erläutert) nach unten drängen, sodass diese Dichtringe 27 wieder tief in den Topf fallen, in den die Dichtringe 27 vorher chaotisch eingeschüttet wurden.

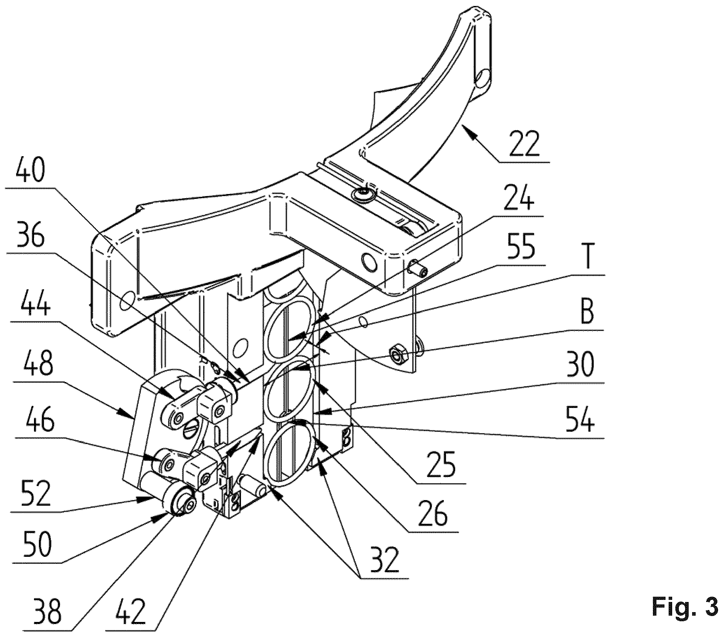

Der Schlitz 23 ist der Beginn eines Fallschachtes 30, welcher in Figur 3 zu sehen ist. Der Fallschacht 30 verläuft exakt vertikal nach unten und hat eine Breite B, die etwas größer ist als der Außendurchmesser der zu vereinzelnden Dichtringe 26. Natürlich kann der Fallschacht 30 auch nicht linear oder nur abschnittsweise linear verlaufen. Wichtig ist jedoch, dass seine Kontur ein Verklemmen der Dichtringe 24, 25, 26 ausschließt.

In Richtung der Tiefe T des Fallschachts 30, welche in der Horizontalebene und senkrecht zur Breite B gemessen wird, hat dieser in der Rückwand als auch im Deckel vorspringende Stege 55. Diese Stege 55 stehen über die Grundfläche hinaus und bestimmen den "lichten Durchlass" im Fallschacht 30. Sie sorgen dafür, dass Dichtringe 24, 25, 26, die nicht ganz eben sind, trotzdem durch den Fallschacht 30 fallen und sich nicht in diesem verklemmen. Die Tiefe T des Fallschachts 30 im Bereich des Steges 55 ist ebenfalls minimal größer als die sogenannte Schnurdicke des Dichtrings In Figur 3 ist eine vordere Deckplatte, die ebenfalls mit einem Steg versehen ist, zur Begrenzung des Fallschachts 30 weggelassen, sodass die nutförmige Vertiefung alleine gezeigt ist, die den Fallschacht 30 in drei Richtungen begrenzt.

Am unteren Ende des Fallschachtes 30 ist dieser mit einer Engstelle versehen, sodass die herabfallenden Dichtringe 26 hier anschlagen, wodurch eine Abnahmestelle für die Dichtringe 26 definiert wird.

Die Engstelle wird in der gezeigte Ausführungsform durch zwei Vorspünge 32 gebildet. Es sind jedoch auch andere Ausführungsformen wie z.B. Stifte oder eine eingesetzte Platte realisierbar.

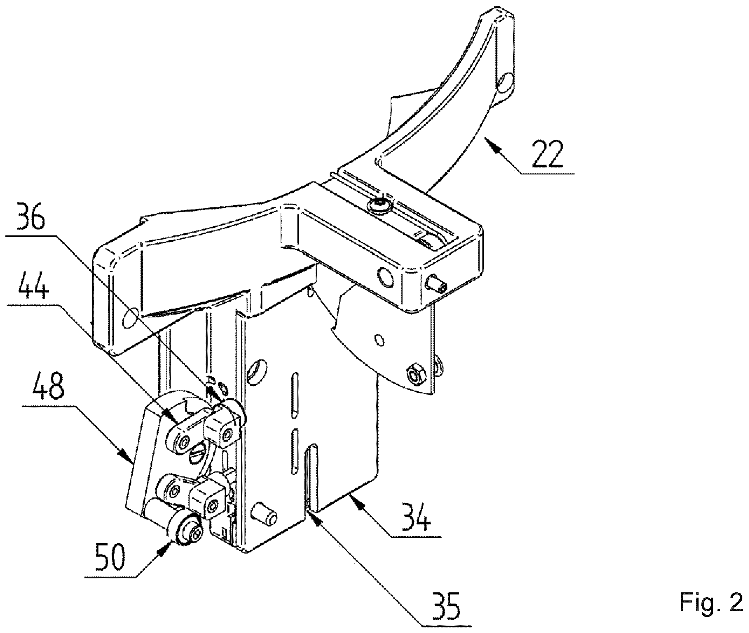

Im Bereich des somit an den Vorsprüngen 32 aufliegenden Dichtrings 26 ist die Deckplatte 34, welche in Figur 2 zu sehen ist, mit einem Vertikalschlitz 35 versehen, über welchen Greiferfinger den untersten Dichtring 26 fassen und aus dem Vibrationswendelförderer, genauer gesagt aus dem Fallschacht 30 ziehen können, um ihn auf ein Bauteil oder ein Werkzeug zu montieren.

Oberhalb des im Fallschacht 30 sich ganz unten befindlichen Dichtrings 26 sind zwei im vorliegenden Beispiel stift- oder schwertförmige Barriereteile, nämlich ein oberes Barriereteil 36 und ein unteres Barriereteil 38, vorgesehen, welche jeweils in einer komplementären Öffnung 40, 42 in einer den Fallschacht 30 begrenzenden Seitenwand geführt sind.

Die Barriereteile 36, 38 sind in einer Ausführungsform über ein Schwenklager jeweils an einem ihnen zugeordneten Schwenkhebel 44, 46 an einer gemeinsamen Wippe 48 gelagert.

Die Wippe 48 ist drehbar am Wechselteil 22 befestigt und damit bildet sie eine Einheit mit diesem.

Die Wippe 48 hat ein Koppelungsteil 50, hier einen Zapfen, der mit einem Antrieb 52, hier einem pneumatischen Antrieb, gekoppelt ist. Der pneumatische Antrieb ist beispielsweise ein Linearzylinder, über den die Wippe 48 hin- und hergeschwenkt wird. Dieser Antrieb wird beispielsweise nur gegen das rollenartige Kopplungsteil drücken und die Wippe 48 nur in eine Richtung bewegen. Die Rückstellung erfolgt dann durch eine oder mehrere Federn. Dadurch kann der Antrieb an der Vorrichtung verbleiben, wenn der Fallschacht 30 gewechselt wird.

Durch das Hin- und Herschwenken der Wippe 48 werden die Barriereteile 36, 38 abwechselnd in den Fallschacht 30 und aus ihm herausgezogen. Wenn das obere Barriereteil 36 in den Fallschacht 30 eindringt, ist das untere Barriereteil 38 aus ihm herausgezogen, wie Figur 3 zeigt.

Die Wippe 48 ist aber kein zwingend notwendiges Teil. Die Barriereteile können auch durch einen oder mehrere eigene Antriebe bewegt werden.

Beispielsweise kann ein erstes Barriereteil am Fallschacht 30 verschieblich befestigt sein und von einer Seite aus in den Fallschacht 30 ragen. Das zweite Barriereteil kann dann von der gegenüberliegenden Seite aus in den Fallschacht 30 eindringen. Die freien Enden der Barriereteile weisen somit aufeinander zu unter axialem Versatz. Beide Barriereteile sitzen gemeinsam an einem angetriebenen Schieber, der seitlich hin- und her bewegt werden kann.

Ein Linearantrieb, der fest am Sortiertopf befestigt ist, wird bei der Montage der Fallschachteinheit an den Schieber angekoppelt. Eine Art Schnellkupplung, die im Längsschnitt eine H-Form aufweist und am Linearantrieb sitzt, wird bei der Montage in eine gabelartige Aufnahme des Schiebers eingesetzt.

Dieser Schieber fährt ein Barriereteil in den Fallschacht und das andere gleichzeitig aus ihm heraus.

Alternativ kann das zweite Barriereteil mit einem eigenen Antrieb ausgebildet oder über ein Getriebe mit dem vorgenannten Antrieb gekoppelt sein, um die gegengleiche Bewegung zum anderen Barriereteil auszuführen.

Aber selbst bei vollständig in den Fallschacht eingeschobener Stellung durchdringen die Barriereteile 36, 38 in ihrer Bewegungsrichtung den Fallschacht 30 nur teilweise. Jedoch ragen sie so weit in den Fallschacht 30 hinein, dass sie als vertikaler Anschlag für die Dichtringe 24 und 25 wirken.

Der vertikale Abstand der beiden Barriereteile 36, 38 beträgt 80 - 120 % der Breite B des Fallschachts 30 und ist etwas größer als der Außendurchmesser der zu vereinzelnden Dichtringe 26.

Wie in Figur 3 zu sehen ist, haben die beiden Barriereteile 36, 38 jeweils an ihrem freien, dem Fallschacht 30 zugeordneten Ende, eine Verjüngung, d. h. das Ende läuft jeweils spitz zu.

Die Position des oberen Barriereteils 36 ist so auf den Durchmesser der zu vereinzelnden Dichtringe 26 abgestimmt, dass der oberste Dichtring 27 allenfalls vernachlässigbar über den Absatz 18 vorsteht, d.h. aus dem Schlitz 23 ragt. Insbesondere geht er sozusagen mit seinem oberen Ende bündig in den Absatz über und stellt eine Verlängerung dieses Absatzes 18 dar.

Der oberste Dichtring darf nicht zu tief sitzen, wenn der Fallschacht 30 im oberen Bereich gefüllt ist, denn sonst würde der nachfolgende Dichtring 27 etwas in den Fallschacht 30 fallen und stark über ihn hinausstehen, sodass die nachfolgenden Dichtringe 26 nicht mehr über diesen obersten Dichtring hinwegbewegt werden und durch die Wand 28 nach unten fallen. Dadurch würden sich Dichtringe 26 in diesem Bereich verklemmen können.

Im Folgenden wird die Funktion des Vibrationswendelförderers 10 erläutert.

In den Sortiertopf 12 werden von oben einfach die zu vereinzelnden Dichtringe 27 eingeschüttet, sodass sie chaotisch im Sortiertopf 12 liegen. Durch Schwingungen, üblicherweise hervorgerufen durch ein Magnetfeld einer Spule, wird der Sortiertopf 12 in einer Förderrichtung, d. h. in oder gegen den Uhrzeigersinn, mit einer bestimmten Amplitude und einer bestimmten Schwingfrequenz angeregt. Damit werden die Dichtringe 27 in Bewegung versetzt, und die an der Seitenwand des Sortiertopfes 12 stehend anliegenden Dichtringe 27 wandern am Absatz 18 aufwärts, bis sie den Schlitz 23 und damit den Fallschachtbeginn erreicht haben.

Ist der Fallschacht 30 noch nicht komplett gefüllt, fällt der ankommende Dichtring 27 in den Fallschacht 30. Auch bei einem leeren Fallschacht kann jedoch dieser Dichtring 27 nicht bis zur sogenannten Abnahmestelle, die durch die Vorsprünge 32 definiert ist, herabfallen, sondern nur bis zum oberen Barriereteil 36, wenn dieses in den Fallschacht 30 ragt.

Wenn der unterste Dichtring 26 von der Abnahmestelle entfernt wird, bewegt sich die Wippe 48 in die in Figur 3 gezeigte Stellung, in der der vorletzte Dichtring 25 dann an die freie Stelle des hier noch eingezeichneten unteren Dichtrings 26 (welcher schon entnommen ist) herabfällt. Gleichzeitig verhindert jedoch das obere Barriereteil 36 ein Nachrutschen des Dichtringes 24 von oben. Anschließend wird die Wippe 48 wieder in die Gegenrichtung angetrieben, sodass der in Figur 3 gezeigte Platz im Fallschacht für den von unten vorletzten Dichtring, der nun frei wurde, wieder mit einem Dichtring aufgefüllt wird. Dieser kann dann als Nächstes zur Abnahmestelle fallen.

Wie in Figur 3 zu sehen ist, ist zwischen dem vorletzten Dichtring 25, wenn das untere Barriereteil 38 in den Fallschacht 30 eingedrungen ist, und dem Dichtring 26 an der Abnahmestelle in vertikaler Richtung ein Spalt 54 vorgesehen. Dieser Spalt 54 verdeutlicht, dass die Positionen der Dichtringe, die sich nicht in der Abnahmestelle befinden, nicht von der Lage der Abnahmestelle abhängig sind, sondern von der vertikalen Lage der Barriereteile 36, 38.

Der Abstand der Barriereteile 36, 38 in vertikaler Richtung ist so exakt auf den Außendurchmesser der Dichtringe 27 abgestimmt, dass bei der Bewegung des obersten Barriereteils 36 in den Fallschacht 30 hinein der dann am oberen Barriereteil 36 anliegende Dichtring 24 nicht oder allenfalls minimal nach oben gedrückt wird.

Der Sortiertopf 12 kann mit unterschiedlichen Wechselteilen 22 bestückt werden. Diese Wechselteile 22 haben zwar auf der Innenseite des Sortiertopfes 12, wo sie den Sortiertopf 12 ergänzen und die Ausnehmung 20 schließen, eine identische Geometrie jedoch haben sie unterschiedlich dimensionierte Schlitze 23 und unterschiedlich breite und tiefe Fallschächte 30, die auf unterschiedliche Dimensionen der Dichtringe 27 abgestimmt sind. Die Dimension der Absätze 18 und die Steigung der Wendel, welche durch den Absatz 18 gebildet ist, sind nämlich so ausgebildet, dass sie unterschiedlich große und unterschiedlich dicke Dichtringe vereinzeln und fördern können. Somit können durch die dadurch gebildete Dichtringvereinzelungsbaugruppe aus einem Sortiertopf 12 und verschiedenen Wechselteilen 22 unterschiedliche Dichtringe 27 vereinzelt werden.

Die Position der Wippe 48 mit den Barriereteilen 36, 38 ist jeweils vertikal so auf die zugeordneten, zu verarbeitenden Dichtringe 27 abgestimmt, dass der oberste Dichtring im Fallschacht 30 stets in derselben vertikalen Position mit seinem oberen Rand abschließt.

Die Abnahmestellen der Wechselteile 22 liegen, bezogen auf den Mittelpunkt der jeweils zu vereinzelnden, sich in der Abnahmestelle befindlichen Dichtringe 26, immer in derselben vertikalen Position, wenn sie in ihrem montierten Zustand sind, d. h. wenn die Wechselteile 22 am Sortiertopf 10 zerstörungsfrei lösbar befestigt sind.

## Patentansprüche

1. Vibrationswendelförderer, mit einem in Vibration versetzbaren Sortiertopf (12), der auf seiner Innenseite einen sich schneckenförmig zum oberen Rand (14) des Sortiertopfs (12) wendelnden Absatz (18) hat, entlang dem in den Sortiertopf (12) chaotisch eingebrachte Dichtringe (27) nacheinander stehend nach oben gefördert werden, einem am oberen Rand (14) sich an den Absatz (18) anschließenden schlitzförmigen Fallschacht (30), in den der oberste Dichtring (24) am Absatz (18) bewegt wird, wobei am unteren Ende des Fallschachts (30) eine Abnahmestelle für ein Aufnahmewerkzeug vorgesehen ist, **dadurch gekennzeichnet, dass** vor der Abnahmestelle zwei wechselweise in den Fallschacht (30) eindringende, vertikal übereinander angeordnete, motorisch angetriebene Barriereteile (36, 38) vorgesehen sind und über denen sich die im Fallschacht (30) befindlichen Dichtringe (24, 25) stapeln können, wobei der unterste Dichtring bei zurückgezogenem unteren Barrierenteil (38) auf die Abnahmestelle fallen kann, **dadurch gekennzeichnet, dass** die Bewegung der Barriereteile (36, 38) zueinander gegengleich ist.

2. Vibrationswendelförderer nach Anspruch 1, **dadurch gekennzeichnet, dass** die Barriereteile (36, 38) durch einen gemeinsamen Antrieb (52) bewegt sind.

3. Vibrationswendelförderer nach Anspruch 2, **dadurch gekennzeichnet, dass** die Barriereteile (36, 38) auf einer gemeinsamen Wippe (48) sitzen, die vom Antrieb (52) geschwenkt wird.

4. Vibrationswendelförderer nach einem der vorhergehenden Ansprüche, **dadurch gekennzeichnet, dass** die Barriereteile (36, 38) in vollständig in den Fallschacht (30) eingeschobener Stellung den Fallschacht (30) nur teilweise in Bewegungsrichtung durchdringen.

5. Vibrationswendelförderer nach einem der vorhergehenden Ansprüche, **dadurch gekennzeichnet, dass** der Abstand der Barriereteile (36, 38) 80-120% der Breite (B) des Fallschachts (30) entspricht.

6. Vibrationswendelförderer nach einem der vorhergehenden Ansprüche, **dadurch gekennzeichnet, dass** die Barriereteile (36, 38) ein zulaufendes, freies Ende haben, mit dem sie in den Fallschacht (30) ragen.

7. Vibrationswendelförderer nach einem der vorhergehenden Ansprüche, **dadurch gekennzeichnet, dass** die Barriereteile (36, 38) in einer Wand am Fallschacht (30) linear geführt sind und von derselben oder von entgegengesetzten Seiten aus in den Fallschacht (30) eindringen können.

8. Vibrationswendelförderer nach einem der vorhergehenden Ansprüche, **dadurch gekennzeichnet, dass** der Fallschacht (30) in einer als Wechselteil (22) ausgebildeten Fallschachteinheit vorhanden ist, welche an dem Sortiertopf (12) zerstörungsfrei lösbar befestigt ist, wobei der Sortiertopf (12) im Bereich des oberen Randes (14) und des Fallschachtsbeginns eine Ausnehmung hat und wobei das Wechselteil (22) die Ausnehmung (20) schließt und den Fallschacht (30) samt Fallschachtbeginn umfasst.

9. Dichtringvereinzelungsbaugruppe mit einem Vibrationswendelförderer (10) nach einem der vorhergehenden Ansprüchen und mehreren, als Wechselteile (22) ausgeführten Fallschachteinheiten, die jeweils an dem Sortiertopf (10) zerstörungsfrei lösbar befestigbar sind, wobei der Sortiertopf (10) im Bereich des oberen Randes (14) und des Fallschachtsbeginns eine Ausnehmung (20) hat und wobei jedes Wechselteil (22) die Ausnehmung (20) schließen kann und den Fallschacht (30) samt Fallschachtbeginn umfasst, wobei die Wechselteile (22) unterschiedliche Fallschachtbreiten (B) haben.

10. Dichtringvereinzelungsbaugruppe nach Anspruch 9, **dadurch gekennzeichnet, dass** jedes Wechselteil (22) an ihr angebrachte Barriereteile (36, 38) hat.

11. Dichtringvereinzelungsbaugruppe nach Anspruch 10, **dadurch gekennzeichnet, dass** im Vergleich der Wechselteile (22) mit unterschiedlichen Fallschachtbreiten (B) und/oder Fallschachttiefen (T) die Barriereteile (36, 38) an unterschiedlichen Höhenpositionen sitzen, wobei die Höhenpositionen so auf die jeweiligen Dichtringe (24, 25) abgestimmt sind, dass das oberste Ende des obersten Dichtrings (24) im Fallschacht (30) immer die gleiche vertikale Position hat und mit der Oberkante der Wendel bündig abschließt.

12. Dichtringvereinzelungsbaugruppe nach einem der Ansprüche 9 bis 11, **dadurch gekennzeichnet, dass** die Abnahmestellen der Wechselteile (22), bezogen auf den Mittelpunkt der jeweils zu vereinzelnden Dichtinge (26), in ihrem montierten Zustand dieselbe vertikale Position haben.

## Claims

1. A vibratory bowl feeder, comprising a sorting bowl (12) which can be caused to vibrate and which has, on its inside, a shoulder (18) which spirally winds to the upper edge (14) of the sorting bowl (12) and along which sealing rings (27) introduced chaotically into the sorting bowl (12) are conveyed upwards one after the other in an upright position, and comprising a slot-shaped drop chute (30) which adjoins the shoulder (18) at the upper edge (14) and into which the uppermost sealing ring (24) at the shoulder (18) is moved, wherein a removal point for a receiving tool is provided at the lower end of the drop chute (30), **characterized in that** provided upstream of the removal point are two motor-driven barrier parts (36, 38) that are arranged vertically one above the other and alternately penetrate the drop chute (30) and above which the sealing rings (24, 25) located in the drop chute (30) can stack, wherein the lowermost sealing ring can fall onto the removal point when the lower barrier part (38) is in the retracted state, **characterized in that** the movement of the barrier parts (36, 38) is in opposite directions relative to each other.

2. The vibratory bowl feeder according to claim 1, **characterized in that** the barrier parts (36, 38) are moved by a shared drive (52).

3. The vibratory bowl feeder according to claim 2, **characterized in that** the barrier parts (36, 38) are seated on a shared rocker (48) that is swiveled by the drive (52).

4. The vibratory bowl feeder according to any of the preceding claims, **characterized in that** when the barrier parts (36, 38) are in a position fully inserted into the drop chute (30), they only partially penetrate the drop chute (30) in the direction of movement.

5. The vibratory bowl feeder according to any of the preceding claims, **characterized in that** the distance between the barrier parts (36, 38) corresponds to 80-120% of the width (B) of the drop chute (30).

6. The vibratory bowl feeder according to any of the preceding claims, **characterized in that** the barrier parts (36, 38) have a tapered, free end by which they project into the drop chute (30).

7. The vibratory bowl feeder according to any of the preceding claims, **characterized in that** the barrier parts (36, 38) are linearly guided in a wall at the drop chute (30) and can penetrate the drop chute (30) from the same side or from opposite sides.

8. The vibratory bowl feeder according to any of the preceding claims, **characterized in that** the drop chute (30) is provided in a drop chute unit which is configured as an interchangeable part (22) and is attached to the sorting bowl (12) so as to be non-destructively detachable, wherein the sorting bowl (12) has a recess in the area of the upper edge (14) and the start of the drop chute, and wherein the interchangeable part (22) closes the recess (20) and comprises the drop chute (30) along with the start of the drop chute.

9. A sealing ring singulation assembly comprising a vibratory bowl feeder (10) according to any of the preceding claims and a plurality of drop chute units which are configured as interchangeable parts (22) and are each attachable to the sorting bowl (12) so as to be non-destructively detachable, wherein the sorting bowl (12) has a recess (20) in the area of the upper edge (14) and the start of the drop chute, and wherein each interchangeable part (22) can close the recess (20) and comprises the drop chute (30) along with the start of the drop chute, the interchangeable parts (22) having different drop chute widths (B).

10. The sealing ring singulation assembly according to claim 9, **characterized in that** each interchangeable part (22) has barrier parts (36, 38) fixed to it.

11. The sealing ring singulation assembly according to claim 10, **characterized in that**, as compared to the interchangeable parts (22) having different drop chute widths (B) and/or drop chute depths (T), the barrier parts (36, 38) are seated at different height positions, wherein the height positions are matched to the respective sealing rings (24, 25) such that the uppermost end of the uppermost sealing ring (24) in the drop chute (30) always has the same vertical position and is flush with the upper edge of the spiral.

12. The sealing ring singulation assembly according to any of claims 9 to 11, **characterized in that** the removal points of the interchangeable parts (22), as related to the center of the respective sealing rings (26) to be singulated, have the same vertical position in their mounted state.

## Revendications

1. Bol vibrant, comprenant un bol de tri (12) qui est apte à être amené à vibrer et qui présente, sur sa face intérieure, un épaulement (18) qui s'élève en hélice vers le bord supérieur (14) du bol de tri (12) et le long duquel des bagues d'étanchéité (27), introduites de manière aléatoire dans le bol de tri (12), sont transportées en position verticale les unes après les autres vers le haut, une goulotte de chute (30) en forme de fente qui se raccorde à l'épaulement (18) au niveau du bord supérieur (14) et dans laquelle la bague d'étanchéité (24) la plus haute au niveau de l'épaulement (18) est déplacée, un point de prélèvement pour un outil de saisie étant prévu à l'extrémité inférieure de la goulotte de chute (30), **caractérisé en ce que**, en amont du point de prélèvement, il est prévu deux pièces de barrière (36, 38) qui sont entraînées par un moteur, agencées verticalement l'une au-dessus de l'autre et pénètrent en alternance dans la goulotte de chute (30) et au-dessus desquelles les bagues d'étanchéité (24, 25) se trouvant dans la goulotte de chute (30) peuvent s'empiler, la bague d'étanchéité la plus basse pouvant tomber sur le point de prélèvement lorsque la pièce de barrière inférieure (38) est rétractée, **caractérisé en ce que** les mouvements des pièces de barrière (36, 38) sont opposés l'un par rapport à l'autre.

2. Bol vibrant selon la revendication 1, **caractérisé en ce que** les pièces de barrière (36, 38) sont déplacées par un entraînement commun (52).

3. Bol vibrant selon la revendication 2, **caractérisé en ce que** les pièces de barrière (36, 38) sont agencées sur une bascule commune (48) pivotée par l'entraînement (52).

4. Bol vibrant selon l'une des revendications précédentes, **caractérisé en ce que**, lorsqu'elles sont dans une position dans laquelle elles sont complètement introduites dans la goulotte de chute (30), les pièces de barrière (36, 38) ne traversent la goulotte de chute (30) que partiellement dans le sens du déplacement.

5. Bol vibrant selon l'une des revendications précédentes, **caractérisé en ce que** l'écartement des pièces de barrière (36, 38) correspond à 80 à 120 % de la largeur (B) de la goulotte de chute (30).

6. Bol vibrant selon l'une des revendications précédentes, **caractérisé en ce que** les pièces de barrière (36, 38) présentent une extrémité libre effilée, par laquelle elles font saillie dans la goulotte de chute (30).

7. Bol vibrant selon l'une des revendications précédentes, **caractérisé en ce que** les pièces de barrière (36, 38) sont guidées linéairement dans une paroi sur la goulotte de chute (30) et sont aptes à pénétrer dans la goulotte (30) depuis le même côté ou depuis des côtés opposés.

8. Bol vibrant selon l'une des revendications précédentes, **caractérisé en ce que** la goulotte de chute (30) est présente dans une unité de goulotte de chute réalisée sous forme de pièce interchangeable (22), laquelle est fixée au bol de tri (12) de manière à pouvoir être détachée de façon non destructive, le bol de tri (12) présentant un évidement dans la zone du bord supérieur (14) et du début de la goulotte de chute, et la pièce interchangeable (22) fermant l'évidement (20) et comprenant la goulotte de chute (30) ainsi que le début de la goulotte de chute.

9. Ensemble de séparation de bagues d'étanchéité comprenant un bol vibrant (10) selon l'une des revendications précédentes et une pluralité d'unités de goulotte de chute réalisées sous forme de pièces interchangeables (22), chacune apte à être fixée au bol de tri (10) de manière à pouvoir être détachée de façon non destructive, le bol de tri (10) présentant un évidement (20) dans la zone du bord supérieur (14) et du début de la goulotte de chute, et chaque pièce interchangeable (22) étant apte à fermer l'évidement (20) et comprenant la goulotte de chute (30) ainsi que le début de la goulotte de chute, les pièces interchangeables (22) présentant des largeurs (B) de goulotte de chute différentes.

10. Ensemble de séparation de bagues d'étanchéité selon la revendication 9, **caractérisé en ce que** chaque pièce interchangeable (22) présente des pièces de barrière (36, 38) fixées sur celle-ci.

11. Ensemble de séparation de bagues d'étanchéité selon la revendication 10, **caractérisé en ce que**, en comparant les pièces interchangeables (22) présentant différentes largeurs (B) de goulotte de chute et/ou différentes profondeurs (T) de goulotte de chute, les pièces de barrière (36, 38) se situent à différentes positions en hauteur, les positions en hauteur étant adaptées aux bagues d'étanchéité (24, 25) respectives de sorte que l'extrémité supérieure de la bague d'étanchéité la plus haute (24) occupe toujours la même position verticale dans la goulotte de chute (30) et affleure le bord supérieur de l'hélice.

12. Ensemble de séparation de bagues d'étanchéité selon l'une des revendications 9 à 11, **caractérisé en ce que** les points de prélèvement des pièces interchangeables (22), par rapport au centre de chacune des bagues d'étanchéité (26) à séparer, occupent la même position verticale à leur état monté.
